# EUROPEAN PATENT SPECIFICATION

(11) **EP 0 591 463 B1**
(45) Date of publication and mention of the grant of the patent: **29.04.1998**
(21) Application number: 92915963.0
(22) Date of filing: 26.06.1992
(51) Int. Cl.: B01D 71/02, B01J 29/06

(54) **A METHOD OF APPLYING MOLECULAR SIEVE CRYSTALS TO A SUPPORT, AND A LOADED SUPPORT THUS OBTAINED**
VERFAHREN ZUM AUFTRAGEN VON MOLEKULARSIEBEKRISTALLEN AUF EINEN TRÄGER UND DER DAMIT ERHALTENE BESCHICHTETE TRÄGER
PROCEDE D'APPLICATION DE CRISTAUX DE TAMIS MOLECULAIRE A UN SUPPORT, ET SUPPORT CHARGE AINSI OBTENU

(30) Priority: 28.06.1991 NL 9101126
(43) Date of publication of application: 13.04.1994
(73) Proprietor: EXXON CHEMICAL PATENTS INC., Linden New Jersey 07036 (US)
(72) Inventor: JANSSEN, Jacobus Cornelis, NL-2628 BL Delft (NL); VAN BEKKUM, Herman, NL-2628 BL Delft (NL)
(74) Representative: White, Nicholas John, Dr.
(86) International application number: NL9200110
(87) International publication number: WO9300155

(56) References cited:
- EP-A- 0 135 069
- EP-A- 0 481 658
- CA-A- 1 235 684
- DE-A- 3 827 049
- US-A- 3 368 981
- US-A- 3 730 910

## Description

The invention relates to a method of applying molecular sieve crystals to a support.

Owing to their chemical and physical nature, molecular sieve crystals find important application in various chemical processes, in particular in catalytic processes and separation processes. In general, they are in that case palletised or extruded, optionally with the aid of binder material and used in a reactor. In general, the crystals in systems thus used are not uniform in size and also pressure losses are hard to avoid.

A number of proposals are known according to which molecular sieve crystals are applied to a support. In that case, generally, the starting material is a support on which separately prepared crystals are spread and, for instance by using a binding agent, are attached.

It is also known to deposit zeolite crystals on a metal surface (cfr. Chem. Mater. Vol. 2 (1990) 712-719). US 3 730 910 is concerned with aluminosilicate and zeolitic materials which comprise aluminosilicate or zeolite surfaces on substrates where the surfaces essentially have the same shape and form as the substrate. EP 0 135 069 A2 describes a composite membrane having a molecular sieve activity and/or catalytic activity and which is composed of a porous support and an ultrathin film of a cage-shaped zeolite. DE 3827 049 A1 describes a zeolitic molecular sieve membrane for separating fluids which comprises a microporous carrier having pore diameters smaller than the mean particle size of zeolitic crystals of the membrane. EP 0 481 658 A1 describes a process for the deposition of a zeo-type material on a porous support which incorporates a surface coating of nickel, cobalt, or molybdenum in the form of the metal and/or the oxide.

The present invention provides a method of applying molecular sieve crystals to a support, comprising contacting said support with a solution of a molecular sieve-forming compound, compounds or precursors thereof, effecting crystallisation on the surface and subsequently calcining the loaded support characterised in that the surface of the support is brought to an oxidic condition by exposing it to the air for a number of hours at a temperature of 400°C or greater.

The invention is based on the insight that in the oxidic layer of a support surface, free hydroxyl groups are present which can form the nucleation points for the crystal growth of the molecular sieve compound on the surface. These nucleation points are formed in that a hydroxyl group present on the surface enters into a condensation reaction with a hydroxyl group in the molecular sieve compound or precursor thereof, thereby forming a crystallisation nucleus. This condensation reaction can be effected using a method which is known per se, for instance under hydrothermal conditions.

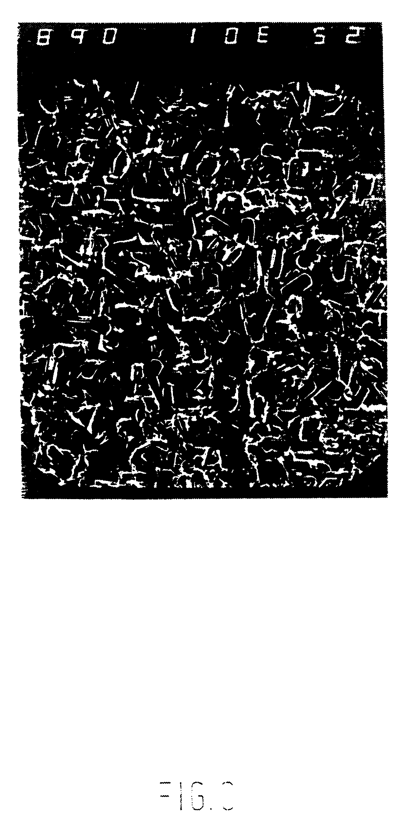

After the crystallization on the surface has been effected, the loaded support is calcined, in particular for 24 h at a temperature of 450°C, so as to render the crystals accessible to host molecules. Fig. 3 shows a photograph of silicalite crystals thus calcined, applied to TiO₂. This figure was made after the loaded support had been subjected in a liquid phase to the grinding forces caused by a magnet agitator for 12 h. In spite of this rough treatment, the specific distribution of the crystals proved to be hardly affected, if at all.

It is clear that the number of free hydroxyl groups on the surface depends on a number of factors. In the first place, this number is determined by the oxidation condition of the surface. Further, the number of hydroxyl groups per unit area is relatively large in metallic supports and relatively small in ceramic (i.e. formed substantially of silicon and aluminum) supports. If the support surface is not or insufficiently in oxidic condition, it can be oxidized using a method which is known per se, for instance by exposure to the air for a number of hours at elevated temperature. When in the method according to the invention a metal support is used, in general the surface thereof is sufficiently oxidized by heating in the air, for instance for four hours at a temperature of 450°C.

The present invention is partly based on the insight that the extent of oxidation of the support surface can be utilized for the manufacture of different types of molecular sieve crystal layers on the support surfaces.

According to a suitable embodiment of the invention, the support is oxidized to such an extent that a large number of nucleation points-forming hydroxyl groups are present on the surface. It can be derived that when the concentration of the molecular sieve solution which the crystals are to develop from is chosen so low that it does not determine the size of the crystals formed, the crystals formed are smaller according as the number of nucleation points is larger, while their number increases as well. When such a solution is caused to crystallize on the support surface, highly uniform and small crystals are obtained, having sizes of 20-250 nanometer and possessing micropores which form a selective entrances for substances to be reacted and a selective exit for product molecules to be formed. Because diffusion inhibition in such crystals is small, thus an excellent molecular sieve catalyst is obtained. It has been found in practice that a catalyst obtained using the method according to the invention, consisting of a support having provided thereon a very fine distribution of molecular sieve cyrstals, provided amply sufficient residence time for substances to be reacted.

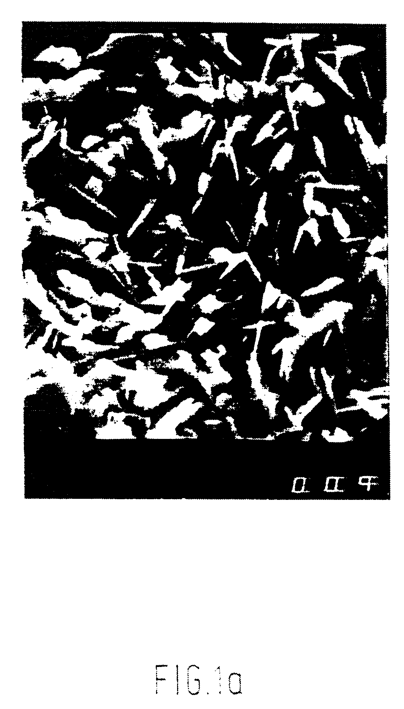

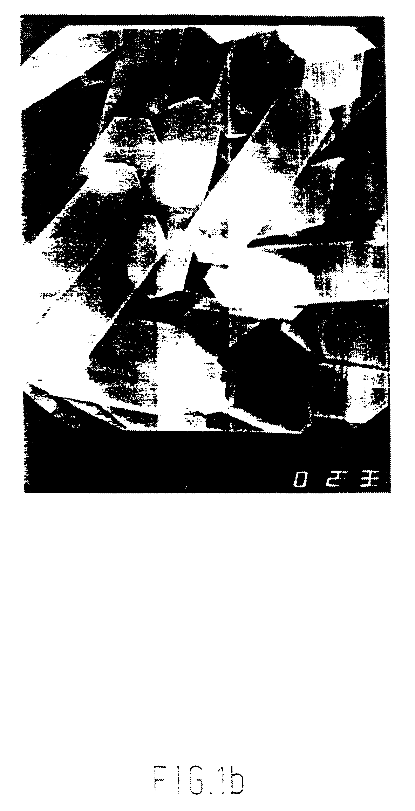

If the starting material is a support having a relatively "rough" surface, i.e., a surface that has not been given a micro-fine flatness, then the hydoxyl groups present thereon will not all be oriented in the same direction. This has as a consequence that the crystals of the molecular sieve compound, formed on the support surface, do not grow onto the surface laterally but grow on axially in particular. Such a growth is shown in Figs 1a and 1b.

Fig. 1a shows, at 2,000 magnifications, silicalite crystals grown onto an aluminum plate, axially in particular. Fig. 1b shows the grown-on crystals at 6,000 magnifications.

It is known that if in the formation of crystals nucleation is large, many small crystals are formed. When, in addition, as a result of high nucleation the supersaturation of the solution of the molecular sieve-forming compound decreases strongly, it can be derived on thermodynamic considerations that crystal growth in a particular direction is strongly inhibited. In the method according to the invention, use is made of this effect, as appears in particular from Figs 1a and 1b. Indeed, these figures show molecular sieve crystals whose thickness is approximately 200 nanometer. These figures show further that highly uniform crystals are obtained. This uniform crystal growth is caused by the very large number of nucleation points on the support surface, so that simultaneous nucleation occurs.

It is these phenomena in particular that give such eminent catalytic properties to the supports loaded with molecular sieve crystals, obtained with the method acording to the invention.

In the method according to the invention, in principle any support is suitable. The only retirement to be met by the support surface is that it can be brought in oxidic condition. Examples of suitable supports are metal supports, for instance made of aluminum, nickel, copper, steel, iron, titanium, etc. Other suitable supports are for instance made of silicon, mica or Al₂O₃. The form of the support will be determined in particular by the purpose for which it is used. Suitable forms are plates, tubes, monolith structures, etc.

Use of certain metal supports, for instance supports made of iron, aluminum and titanium, offers the advantage that during crystal growth and in particular in a basic environment they release metal ions, which are incorporated into the molecular sieve lattice or become associated with the lattice. Thus, in a simple manner, catalytically active sites can be formed in the molecular sieve material.

In principle, any molecular sieve compound or precursor thereof can be caused to crystallize on the support surface. Good results are for instance obtained with zeolites such as silicalite-1, ZSM-5, and mordenite and with the molecular sieve AlPO-5. These molecular sieves lead to very small crystals, which are highly uniform in size, and, in the case of silicalite and ZSM-5, have a short pore length as well as a very large number of pore entrances.

The synthesis of molecular sieves is known per se and extensively described in the literature. (cfr.: "Zeolite Synthesis", M.L. Occelli and H.E. Robson (Eds.), ACS Symposium series 398, ACS, Washington DC, 1989. "Introduction to Zeolite Science and Practice". H. van Bekkum, E.M. Flanigen and J.C. Jansen (Eds.) Stud. Surf. Sci, Catal, Vol. 58, Elsevier, Amsterdam, Netherlands, 1991.

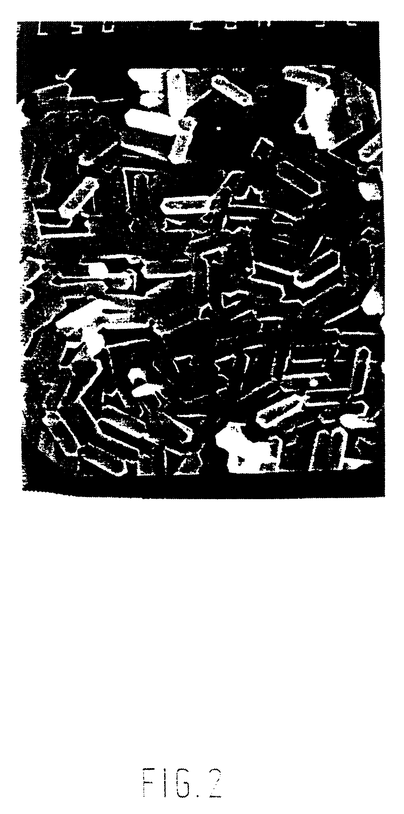

According to a particular embodiment of the method according to the invention, a very smooth, i.e., an essentially flat support is used. "Essentially flat" refers to a support having its atoms arranged substantially in one plane. Use of such a support has the important advantage that the hydroxyl groups on the surface are all substantially oriented in the same direction. When it is provided, through sufficient oxidation, that a large number of hydroxyl groups, i.e., a large number of nucleation points, are present on the surface, the formation of crystals on that surface appears to take place in such a manner that the cyrstals are applied in close continuous relationship in the form of a monolayer. Fig. 2, at 4,800 magnifications, shows a monolayer of silicalite crystals thus applied. As the figure shows, the crystallization can be continued in such a manner, that no free space is present between the crystals anymore. Optionally, layer-sealing material can be used, for instance using techniques known from lithography. When subsequently the support is partly removed, an eminent ceramic membrane is obtained. The partial etching of a, for instance metal, support, such that openings are formed therein, can be effected in a simple manner, for instance by etching with acid. In practice, this can lead to eminent results because the molecular sieve crystals, insofar as zeolite crystals of relatively high Si/Al ratios are involved, are acid-resistant.

As noted before, a very suitable method for applying molecular sieve crystals to the support surface is the so-called hydrothermal synthesis. Then the oxidized support is submerged in a solution of the molecular sieve compound or the precursor thereof, and heated, for instance in an autoclave, for a number of hours at a temperature of 120-180°C. when catalytically active ions, for instance metal ions, such as gallium, iron, titanium, vanadium, aluminum, cobalt or borium are added to the molecular sieve solution, they deposit in the zeolite lattice, the pores and/or on the surface of the crystals formed, so that the catalyst function of the assembly so obtained can be influenced.

This addition of cobalt or vanadium is particularly interesting in the case where the molecular sieve is AlPO-5 because it has only modest catalytic activity.

### Example 1

An aluminum foil of an area of 1 cm² was maintained at a temperature of 400°C in a hot-blast furnace for one hour, so as to obtain an oxidic surface layer.

The foil so treated was introduced into a stainless steel, teflon-coated autoclave of a volume of 3 ml, with 2 ml of a solution containing 1 g of a 40% solution of TPAOH (tetrapropylammoniumhydroxide) and 0.12 g SiO₂ per 100 g H₂O. The pH of this solution was 12.5.

The solution containing the support was heated for 6-8 h at a temperature of 180°C. After washing and drying, a thin layer of highly uniform prismatic crystals of the MFI type of a size of 1 x 0.5 x 0.1 µm was obtained, which were randomly oriented on the support surface and covered it entirely.

Then calcination was carried out at a temperature of 450°C for 24 h, so as to provide accessibility to migrant molecules. After this calcining treatment, it was found the crystals were still eminently bound to the metal surface.

### Example 2

A stainless steel grid of a size of 5 x 5 cm and having holes of 0.5 mm was heated in a hot-blast furnace for one hour at 400°C. In a teflon-coated stainless steel autoclave of a volume of 35 ml, 25 ml of a solution containing 1 g of a 40% TPAH solution and 0.12 g SiO₂ per 100 g water was added to the grid. The pH of this solution was 12.5.

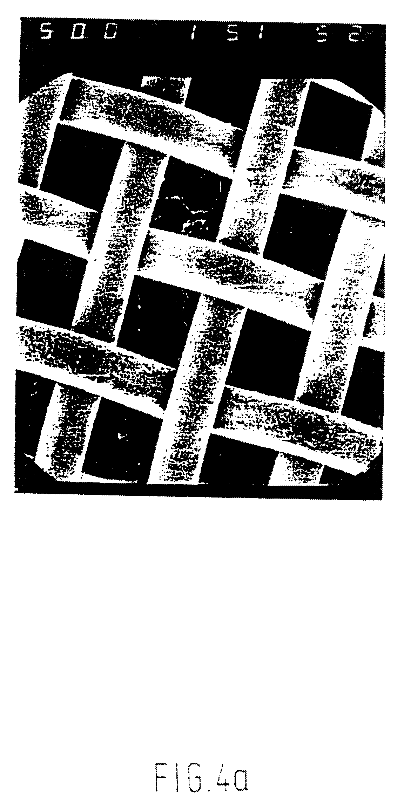

The solution, with the grid provided therein, was heated for 8 h at a temperature of 170°C. After washing, drying and calcining for 24 h at 450°C, the surface of the grid was entirely covered with elongate prismatic crystals of the MFI type. Figs 4a, 4b and 4c each show the same part of the grid obtained, covered with crystals, at 150, 860 and 3,000 magnifications, respectively.

### Example 3

An aluminum platelet having an area of 1 cm² and a thickness of 0.5 mm was placed in a hot-blast furnace and maintained at a temperature of 450°C for 1 hour. Then the platelet was introduced into a teflon-coated stainless steel autoclave of a volume of 3 ml and added thereto were 2 ml of a solution containing 1 g of 40% TPAOH and 0.12 g SiO₂ per 250 ml. The pH of this solution was 12.3.

The solution with the platelet disposed therein was heated at a temperature of 145°C for 10 h.

After washing and drying, a thin film of uniform, elongate prismatic crystals of the MFI type was obtained, which crystals proved to be oriented parallel to the surface of the metal platelet.

After calcination for 24 h at 450°C, it was found that the cyrstals were still eminently bound to the support. Fig. 2 shows the support-crystal combination so obtained.

### Example 4

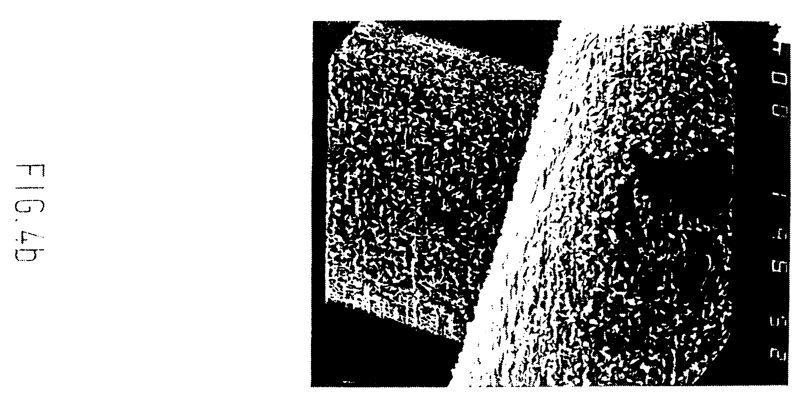

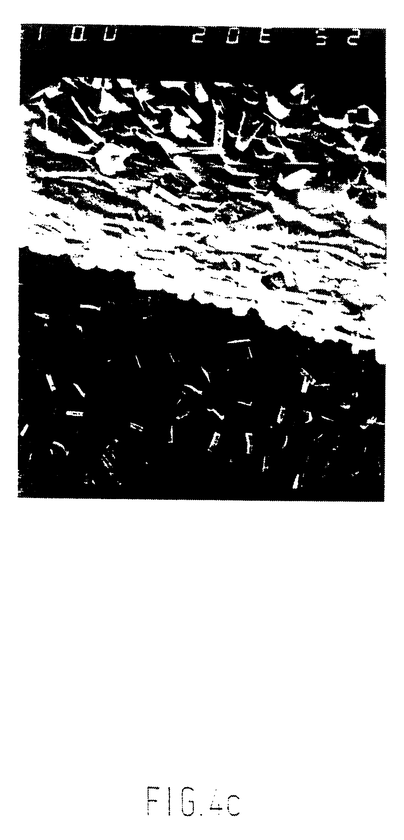

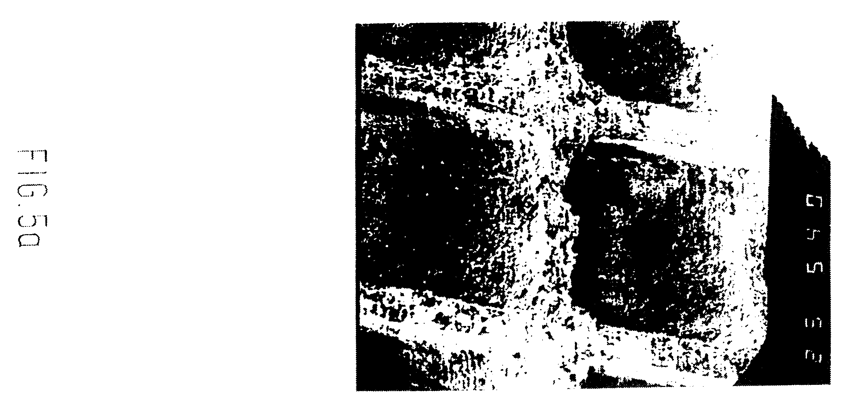

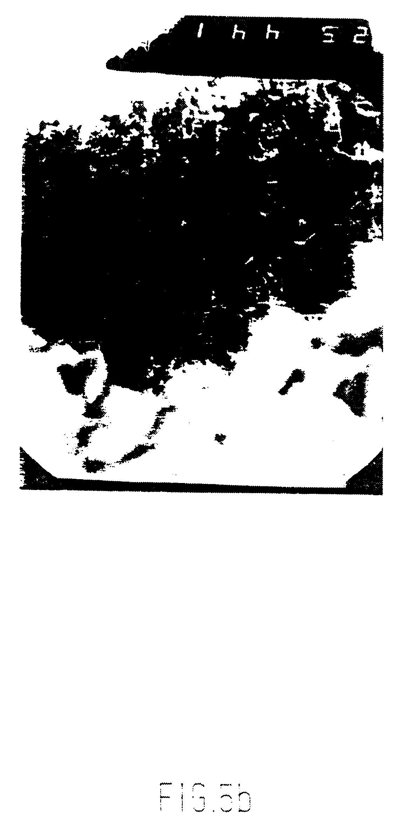

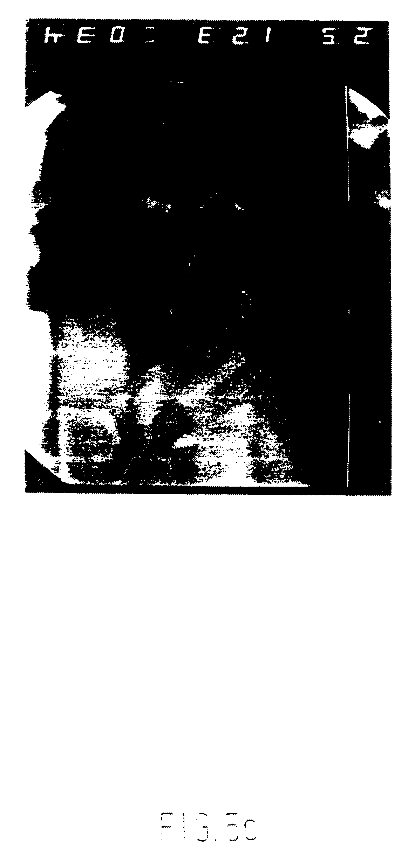

Using the method as described in Example 2, crystals of the MFI type were introduced into a monolith, made of corderite. Figs 5a, 5b, and 5c show the crystal-covered monolith thus obtained at 54, 440 and 12,000 magnifications, respectively, of the same view. It is clearly observable that complete covering with crystals of the internal surface was obtained.

### Example 5

A copper platelet of 1 cm² was submerged in 2 ml of a solution containing 100 g Na₂SiO₃9H₂O and 80 g NaAlO₂ per 100 ml triethanolamine and 700 ml H₂O.

The solution with the copper platelet was placed in an autoclave for 10 h at 90°C. After washing and drying, cubic crystals of the zeolite type A were found in a dense layer on the metal surface.

### Example 6

An aluminum platelet of 1 cm² was added to a 2 ml solution containing 2.5 g concentrated H₃PO₄, 5 g Pr₃N, and 0.5 g HF (40%) per 50 g H₂O.

This solution with metal was heated in an autoclave for 10 h at 180°C. After washing and drying, so-called AlPO-5 crystals were found on the metal surface.

## Claims

1. A method of applying molecular sieve crystals to a support, comprising bringing a surface of the support to an oxidic condition by exposing it to the air for a number of hours at a temperature of 400°C or greater, contacting said support having an oxidic condition with a solution of the molecular sieve-forming compound, compounds or precursors thereof, effecting crystallization on the surface and subsequently calcining the loaded support.

2. A method according to claim 1, characterized in that the support surface is exposed to the air for 4 h at a temperature above 450°C.

3. A method according to claim 1 or 2, characterized in that the crystallization on the surface is effected by hydrothermal synthesis.

4. A method according to claim 3, characterized in that the support surface is submerged in a solution of the molecular sieve compound or compounds or precursors therfor, the temperature of the solution being 120-180°C.

5. A method according to claims 1-4, characterized in that calcining is carried out for 24 h at a temperature of 450°C.

6. A method according to claims 1-5, characterized in that catalytically active metal ions are added to the molecular sieve solution.

7. A method according to one or more of claims 1-6, characterized in that a completely flat support is provided with a substantially continuous layer of molecular sieve crystals, whereafter the support is partly removed and a membrane is formed.

8. A catalyst comprising a support having provided theron crystallized molecular sieve compounds obtained using the method according to claims 1-6.

9. A membrane obtained using the method according to any of claims 1-7.

## Patentansprüche

1. Verfahren zum Aufbringen von Molekularsiebkristallen auf einen Träger, bei dem eine Oberfläche des Trägers in einen oxidischen Zustand gebracht wird, indem sie eine Anzahl von Stunden bei einer Temperatur von 400°C oder höher Luft ausgesetzt wird, der Träger mit einem oxidischen Zustand mit einer Lösung der Molekularsieb bildenden Verbindung, der Molekularsieb bildenden Verbindungen oder Vorläufern derselben kontaktiert wird, Kristallisation auf der Oberfläche bewirkt wird und nachfolgend der beladene Träger calciniert wird.

2. Verfahren nach Anspruch 1, dadurch gekennzeichnet, daß die Trägeroberfläche 4 h bei einer Temperatur über 450°C Luft ausgesetzt wird.

3. Verfahren nach Anspruch 1 oder 2, dadurch gekennzeichnet, daß die Kristallisation auf der Oberfläche durch hydrothermale Synthese bewirkt wird.

4. Verfahren nach Anspruch 3, dadurch gekennzeichnet, daß die Trägeroberfläche in einer Lösung der Molekularsiebverbindung oder -verbindungen oder Vorläufern derselben untergetaucht wird, wobei die Temperatur der Lösung 120 bis 180°C beträgt.

5. Verfahren nach einem der Ansprüche 1 bis 4, dadurch gekennzeichnet, daß die Calcinierung 24 h bei einer Temperatur von 450°C durchgeführt wird.

6. Verfahren nach einem der Ansprüche 1 bis 5, dadurch gekennzeichnet, daß der Molekularsieblösung katalytisch aktive Metallionen zugesetzt werden.

7. Verfahren nach einem oder mehreren der Ansprüche 1 bis 6, dadurch gekennzeichnet, daß ein vollständig ebener Träger mit einer im wesentlichen kontinuierlichen Schicht aus Molekularsiebkristallen bereitgestellt wird, wonach der Träger teilweise entfernt und eine Membran gebildet wird.

8. Katalysator, der einen Träger umfaßt, auf dem nach dem Verfahren gemäß Ansprüchen 1 bis 6 erhaltene kristallisierte Molekularsiebverbindungen bereitgestellt sind.

9. Membran, die unter Verwendung des Verfahrens gemäß einem der Ansprüche 1 bis 7 erhalten worden ist.

## Revendications

1. Procédé pour appliquer des cristaux de tamis moléculaire à un support, comprenant les étapes consistant à amener une surface du support à un état oxydique en l'exposant à l'air pendant un certain nombre d'heures à une température égale ou supérieure à 400°C, à mettre en contact ledit support à l'état oxydique avec une solution d'un ou plusieurs composés de formation de tamis moléculaire ou de leurs précurseurs, à provoquer la cristallisation sur la surface, puis à calciner le support chargé.

2. Procédé suivant la revendication 1, caractérisé en ce que la surface du support est exposée à l'air pendant 4 heures à une température supérieure à 450°C.

3. Procédé suivant la revendication 1 ou 2, caractérisé en ce que la cristallisation sur la surface est effectuée par synthèse hydrothermique.

4. Procédé suivant la revendication 3, caractérisé en ce que la surface du support est immergée dans une solution du ou des composés de formation de tamis moléculaire ou de leurs précurseurs, la température de la solution étant comprise dans l'intervalle de 120° à 180°C.

5. Procédé suivant les revendications 1 à 4, caractérisé en ce que la calcination est effectuée pendant 24 heures à une température de 450°C.

6. Procédé suivant les revendications 1 à 5, caractérisé en ce que des ions métalliques catalytiquement actifs sont ajoutés à la solution de tamis moléculaire.

7. Procédé suivant une ou plusieurs des revendications 1 à 6, caractérisé en ce qu'un support parfaitement plat est muni d'une couche pratiquement continue de cristaux de tamis moléculaire, puis le support est éliminé partiellement et une membrane est formée.

8. Catalyseur comprenant un support muni en surface de composés consistant en tamis moléculaires cristallisés, obtenu au moyen du procédé suivant les revendications 1 à 6.

9. Membrane obtenue au moyen du procédé suivant l'une quelconque des revendications 1 à 7.
